# EUROPEAN PATENT APPLICATION

(11) **EP 2 814 054 A2**
(43) Date of publication of application: **17.12.2014**
(21) Application number: 13195454.7
(22) Date of filing: 03.12.2013
(51) Int. Cl.: H01L 21/56

(54) **Method of manufacturing fingerprint recognition home key**

(30) Priority: 10.06.2013 KR 20130065697
(71) Applicant: Dreamtech Co., Ltd, Gyeonggi-do 463-824 (KR)
(72) Inventor: Lee, Ho-Jun, 331-220 Chungcheongnam-do (KR); Kim, Young-Ho, 448-505 Gyeonggi-do (KR)
(74) Representative: Finnie, Peter John

(57) **Abstract**

Disclosed is a method of manufacturing a fingerprint recognition home key. In this method, an external member having a high dielectric constant is bonded to a film of a fingerprint recognition sensor, thereby increasing a fingerprint recognition rate, reducing manufacturing time, and providing a pleasant outer appearance. The method includes preparing an injection molded product having a shape of a home key and provided with a fingerprint recognition sensor, applying a bonding material or an adhesive to an upper side of a film of the fingerprint recognition sensor, and bonding an external member to the upper side of the film of the fingerprint recognition sensor to which the bonding material or the adhesive is applied.

## Description

### BACKGROUND

### 1. Technical Field

The present invention generally relates to a method of manufacturing an exterior member bonding type fingerprint recognition home key, and more particularly, to a method of manufacturing an exterior member bonding type fingerprint recognition home key capable of improving fingerprint recognition rate and outer appearance.

### 2. Description of the Related Art

Generally, fingerprint recognition technology is used to prevent various security incidents through user registration and authentication procedures.

For example, fingerprint recognition technology is utilized for defense of personal and group networks, protection of various content and data, access control, and the like.

With recent rapid increase of various portable devices including smart phones, tablet personal computers (PCs), and the like, unintentional leakage of private data stored in the portable devices frequently occurs.

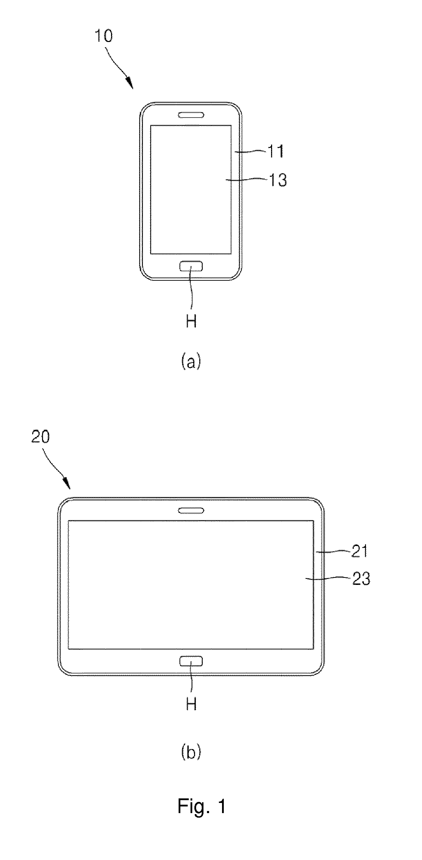

Fig. 1 shows two examples of a general portable device.

In Fig. 1, (a) shows a smart phone, and (b) shows a tablet PC.

Referring to (a) and (b) of Fig. 1, a smart phone 10 or a tablet PC 20 includes a main body 11, 21, a display device 13, 23 placed on a front side of each main body, and a home key H provided to one side of each display device.

The home key H is provided to perform a preset operation of the smart phone or the tablet PC. When the home key H is pressed or touched during use of the portable device, a convenient function such as return to an initial screen is provided.

Electrostatic fingerprint recognition technology is based on electrical conductivity of the skin, and reads out inherent fingerprint patterns of users as an electric signal.

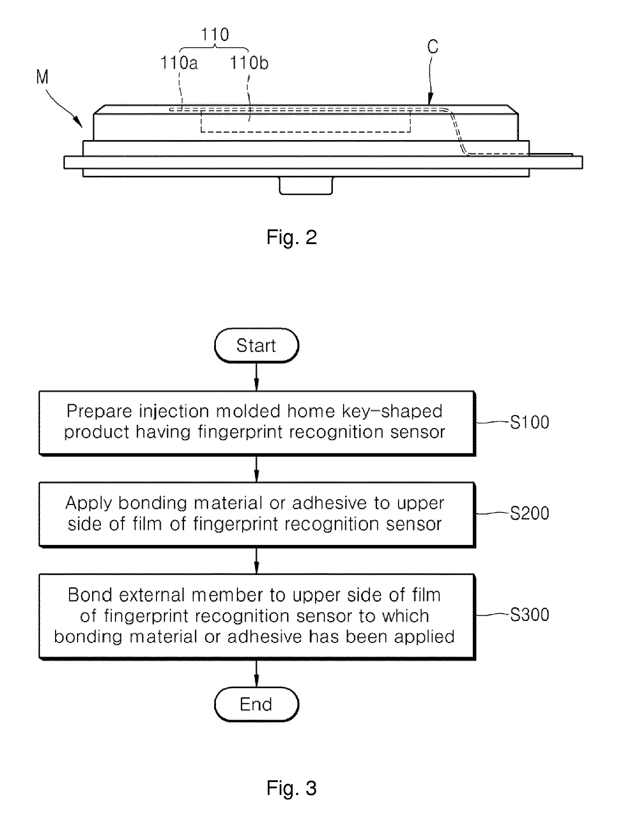

A structure of a home key receiving an electrostatic fingerprint recognition sensor is shown in Fig. 2.

Fig. 2 is a sectional view of a fingerprint recognition home key. The fingerprint recognition sensor is received under a top surface of a product M provided in the form of the home key by injection molding and the like.

The fingerprint recognition sensor includes an application specific integrated circuit (ASIC) 110a and a flexible printed circuit board (FPCB) film 110b, in which the ASIC 110a serves to convert detected analog data into a digital signal and is electrically connected to the FPCB film 110b formed with a pattern for recognizing a fingerprint.

Further, a coating C having a predetermined thickness is composed of a bottom coat, a middle coat, and a top coat. The bottom coat is formed by depositing a primer and forming a shielding layer on the top surface of the product, the middle coat is formed on the bottom coat by painting or the like, and the top coat is formed on the middle coat by urethane or ultraviolet (UV) deposition.

Here, if the thickness of the coating C exceeds a reference thickness, the fingerprint recognition rate can be lowered.

In addition, many coating processes are required as mentioned above, thereby causing increase in process time in manufacture of the fingerprint recognition home key.

In the related art, Korean Patent Publication No. 2002-0016671A (published on March 6, 2002) discloses a portable information terminal having a built-in fingerprint recognition module and a control method thereof.

### BRIEF SUMMARY

It is one aspect of the present invention to provide a method of manufacturing an exterior member bonding type fingerprint recognition home key, which can be received in a portable device and has a function of recognizing a user fingerprint.

It is another aspect of the present invention to provide a method of manufacturing an exterior member bonding type fingerprint recognition home key, in which an external member is simply bonded to a film of a fingerprint recognition sensor instead of performing several coating processes.

It is a further aspect of the present invention to provide a method of manufacturing an exterior member bonding type fingerprint recognition home key, in which an external member is formed of glass or resin having a high dielectric constant, thereby improving fingerprint recognition rate.

In accordance with one aspect of the present invention, a method of manufacturing an exterior member bonding type fingerprint recognition home key includes: (a) preparing an injection molded product having a shape of a home key and provided with a fingerprint recognition sensor; (b) applying a bonding material or an adhesive to an upper side of a film of the fingerprint recognition sensor; and (c) bonding the external member to the upper side of the film of the fingerprint recognition sensor to which the bonding material or the adhesive is applied.

The applying a bonding material or an adhesive may include applying the bonding material or the adhesive to the upper side of a film of the fingerprint recognition sensor or attaching a double-sided tape.

The external member may be formed of general glass or tempered glass.

The external member may be formed of general glass or tempered glass having a thickness of 40 µm to 100 µm.

The external member may be formed of sapphire glass.

The external member may be formed of sapphire glass having a thickness of 70 µm to 140 µm.

The external member may be formed of a plastic film or an injection molded thin film.

The external member may be formed of a plastic film or an injection molded thin film having a thickness of 30 µm to 130 µm.

The bonding the external member to the upper side of the film of the fingerprint recognition sensor may further include: (c-1) preparing the external member; and (c-2) color printing on a rear of the external member after deposition before bonding the external member to the upper side of the film of the fingerprint recognition sensor.

The upper side of the prepared external member may have at least one shape selected from among a first shape that is generally flat, a second shape that protrudes upwardly, and a third shape that is recessed downwards.

The color printing may be performed at least once.

The color printing may be performed at least once and the deposition and color print layer may have a thickness of 2 µm to 30 µm.

### BRIEF DESCRIPTION OF THE DRAWINGS

The above and other aspects, features and advantages of the present invention will become apparent from the following description of exemplary embodiments given in conjunction with the accompanying drawings, in which:
Fig. 1 schematically shows a mobile phone and a tablet PC as examples of a general portable device;
Fig. 2 schematically shows an internal structure of a fingerprint recognition home key;
Fig. 3 is a flowchart of a method of manufacturing an exterior member bonding type fingerprint recognition home key according to one embodiment of the present invention;
Fig. 4 is a view explaining a material and thickness of an external member in bonding the external member (Step S300) in Fig. 3;
Fig. 5 is a flowchart of a detailed process of bonding the external member (S300) shown in Fig. 3;
Fig. 6 is a side sectional view of a fingerprint recognition sensor, showing that a bonding material or an adhesive is deposited on an upper side of a film of the fingerprint recognition sensor through preparation of a fingerprint recognition sensor (Step S 100) and application of a bonding material or an adhesive (Step S200) in Fig. 3;
Fig. 7 is a side sectional view of the external member bonded to the fingerprint recognition sensor via the bonding material or the adhesive in bonding the external member (Step S300) in Fig. 3;
Fig. 8 is a side sectional view of a fingerprint recognition home key manufactured by the process shown in Fig. 3; and
Fig. 9 is a side sectional view explaining thickness t1 of the external member and thickness t2 of a deposition and color print layer.

### DETAILED DESCRIPTION

Hereinafter, exemplary embodiments of the present invention will be described with reference to accompanying drawings.

Fig. 3 is a flowchart of a method of manufacturing an exterior member bonding type fingerprint recognition home key according to one embodiment of the present invention.

A method of manufacturing an exterior member bonding type fingerprint recognition home key (hereinafter, referred to as the "method of manufacturing a fingerprint recognition home key") is achieved by preparing a fingerprint recognition sensor (S100), applying a bonding material or an adhesive (S200), and bonding the external member (S300).

### Preparation of fingerprint recognition sensor (S200)

In this operation, a fingerprint recognition sensor is prepared.

More specifically, a home key-shaped product, which can be received inside a portable device by injection molding and the like, is prepared using an electrostatic fingerprint recognition sensor.

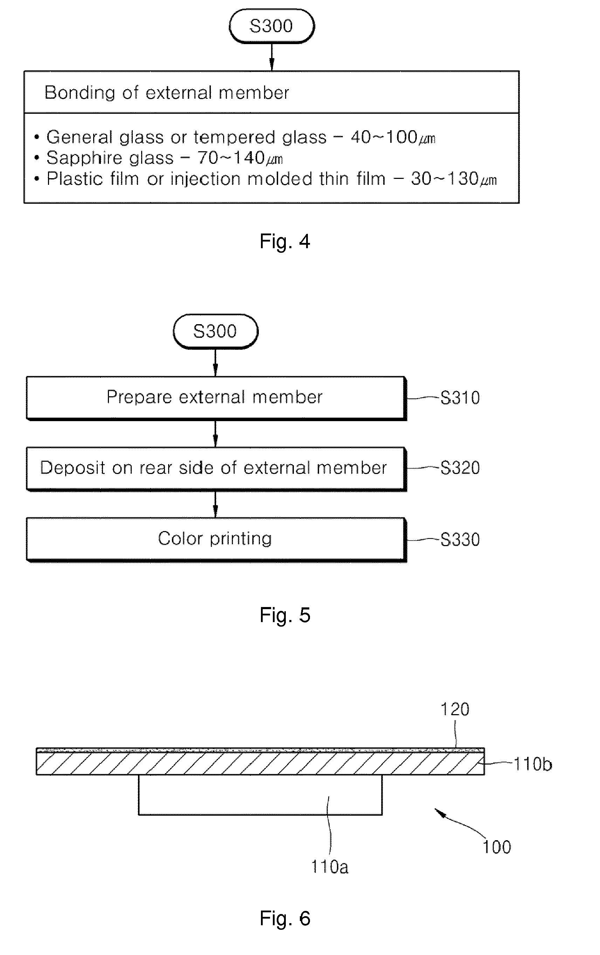

Referring to Fig. 6, a schematic sectional structure of the fingerprint recognition sensor 110 is shown.

Although the shapes of the product molded in the form of a home key by injection molding and the like (that is, an injection molded product) are not separately shown, the product may have various shapes.

Further, the fingerprint recognition sensor 110 is placed on the top of the product molded in the form of a home key.

The fingerprint recognition sensor 110 includes an ASIC 110a and an FPCB film 110b (hereinafter, referred to as the "film of the fingerprint recognition sensor").

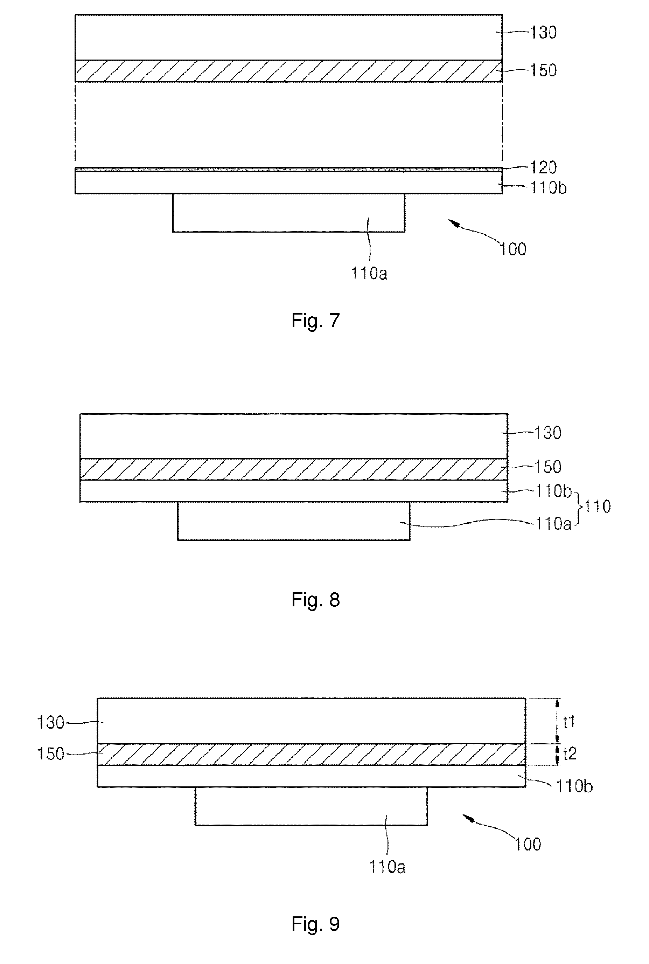

Referring to Fig. 7, in the fingerprint recognition sensor 110, the ASIC 110a serves to convert detected analog data into a digital signal and is electrically connected to the film 110b of the fingerprint recognition sensor 110 having a pattern for recognizing a fingerprint.

The film 110b of the fingerprint recognition sensor 110 refers to an FPCB formed of a polyimide (PI) film.

For instance, the fingerprint recognition sensor 110 may have a thickness of about 25 µm.

The fingerprint recognition sensor 110 is of an electrostatic type, which uses electrical conductivity of the skin to read out inherent fingerprint patterns of users as an electric signal.

### Application of bonding material or adhesive (S200)

In this operation, a bonding material or an adhesive is applied to the film. That is, the bonding material or the adhesive is applied to an upper side of the film of the fingerprint recognition sensor prepared in S100.

Referring to Fig. 6, it can be seen that the bonding material or the adhesive 120 is applied to the upper side of the film of the fingerprint recognition sensor prepared in S100.

Here, the bonding material or the adhesive 120 may include well-known adhesives or bonding materials such as glues. Alternatively, a double-sided tape having a bonding or adhesive function may be used.

The double-sided tape may be attached to the upper side of the film 110b of the fingerprint recognition sensor.

In particular, when applying the bonding material or the adhesive, a metering dispenser may be used.

### Bonding of external member (S300)

In this operation, an external member is bonded to the upper side of the film of the fingerprint recognition sensor to which the bonding material or the adhesive has been applied in S200.

Referring to Fig. 7, the external member 130 is bonded to the upper side of the film 110b of the fingerprint recognition sensor to which the bonding material or the adhesive 120 has been applied in S200.

Further, Fig. 8 shows that bonding between the fingerprint recognition sensor 110 and the external member 130 is completed in S300.

In this operation, the external member 130 may include various materials having a high dielectric constant.

Specifically, three kinds of materials may be employed for the external member 130.

In one embodiment, general glass or tempered glass may be used.

In another embodiment, sapphire glass may be used.

In a further embodiment, a plastic film or an injection molded thin film may be used.

Fig. 4 shows the thickness range of the external member according to the kind of external member.

First, when general glass or tempered glass having a high dielectric constant is used as the external member, the external member may have a thickness of 40 µm to 100 µm.

If the thickness of the external member is less than 40 µm, the external member is excessively thin and can thus be easily damaged or broken when touched by a finger.

If the thickness of the external member exceeds 100 µm, the fingerprint recognition rate can be lowered due to increase in distance between a fingerprint and the sensor.

Next, when sapphire glass having a higher dielectric constant than general glass or tempered glass is used as the external member, the external member may have a thickness of 70 µm to 140 µm.

In this case, if the thickness of the external member is less than 70 µm, the external member is excessively thin and thus can be easily damaged or broken.

If the thickness of the external member exceeds 140 µm, the fingerprint recognition rate can be lowered even though the dielectric constant of sapphire glass is higher than that of the general glass or tempered glass.

Further, when the plastic film or injection molded thin film is used as the external member, the external member may have a thickness of 30 µm to 130 µm.

In this case, if the thickness of the external member is less than 30 µm, the external member is excessively thin and thus can be easily damaged or broken.

On the other hand, if the thickness of the external member exceeds 130 µm, the fingerprint recognition rate can be lowered.

As such, when using the three kinds of material such as general glass or tempered glass, sapphire glass, a plastic film or an injection molded thin film as the external member 130, the upper limit of thickness of each material is selected to secure a fingerprint recognition rate of 90% or more upon testing several times under the same conditions using the same fingerprint recognition sensor.

Referring to Fig. 5, the method may include preparing an external member (S310) and color printing on a rear side of the external member after deposition (S320), before bonding the external member to the upper side of the film of the fingerprint recognition sensor (S300).

In the preparation of the external member (S310), any one of the foregoing materials, that is, general glass or tempered glass, sapphire glass, a plastic film or an injection molded thin film, is used to prepare the external member.

In particular, the prepared external member may have any one shape selected from among a first shape that is generally flat, a second shape that protrudes upwardly, and a third shape that is recessed downwards.

An existing coating method cannot provide the second shape that protrudes upwardly, and the third shape that is recessed downwards. However, according to embodiments of the invention, various materials such as glass and the like are used as the external member, thereby providing various pleasant outer appearances.

For example, the external member may be designed to have a variety of curved shapes, thereby achieving various designs of the home key.

Deposition on the rear side of the external member is performed to facilitate color printing. After deposition on the rear side of the external member, color printing is performed by selecting a color matching a color of a portable device according to operator selection or consumer demand.

For example, a printed layer having a black or white color may be formed.

In addition, color printing may be performed at least once. That is, color printing may be performed once or more as necessary.

Referring again to Figs. 8 and 9, the deposition and color print layer 150 is formed on the rear side of the external member 130, and then the external member 130 is firmly bonded to the upper side of the film 110b of the fingerprint recognition sensor via the bonding material or the adhesive 120.

Here, the deposition and color print layer 150 on the rear of the external member 130 may have a thickness of 2 µm to 30 µm.

Fig. 9 is a side sectional view explaining thickness t1 of the external member and thickness t2 of a deposition and color print layer.

As shown, the external member 130 is in close contact with the uppers side of the film 110a of the fingerprint recognition sensor, and the deposition and color print layer 150 are formed on the rear of the external member 130.

Here, the external member 130 may have a thickness t1 ranging from 40 µm to 100 µm when the general glass or tempered glass is used as the external member, a thickness t1 ranging from 70 µm to 140 µm when the sapphire glass is used as the external member, and a thickness t1 ranging from 30 µm to 130 µm when the plastic film or the injection molded thin film is used as the external member.

If the thickness t1 is less than a lower thickness limit of each material, the external member is excessively thin and thus can be easily damaged or broken according to properties of the corresponding material. On the other hand, if the thickness t1 exceeds an upper thickness limit of each material, the fingerprint recognition rate can be lowered due to excessive thickness of the external member.

Here, the upper thickness limit of each material is selected to secure a fingerprint recognition rate of 90% or more upon testing several times under the same conditions using the same fingerprint recognition sensor.

As described above, according to one embodiment, the method may manufacture a home key that can be received in a portable device and has a function of recognizing a user fingerprint.

In particular, instead of performing many coating processes, such as primer and shielding, painting, urethane and UV coating, an external member is directly bonded to a film of a fingerprint recognition sensor in manufacture of the fingerprint recognition home key, thereby significantly reducing manufacturing time.

In addition, according to one embodiment, general glass or tempered glass, sapphire glass, a plastic film or an injection molded thin film, which have a high dielectric constant, may be used as a material for the external member, which will be bonded to the film of the fingerprint recognition sensor, thereby improving a fingerprint recognition rate.

In particular, we ascertained, through repeated testing, that the fingerprint recognition rate can be improved by up to 90%.

Further, according to one embodiment, glass or the like is used as the material for the external member, whereby the home key may have various outer appearances, such as an upwardly protruding shape, a downwardly recessed shape, and the like.

Thus, it is possible to achieve various designs of the fingerprint recognition home key.

Although some embodiments have been provided to illustrate the present invention, it will be apparent to those skilled in the art that the embodiments are given by way of illustration, and that various modifications and equivalent embodiments can be made without departing from the spirit and scope of the present invention. Accordingly, the scope of the present invention should be limited only by the accompanying claims and equivalents thereof.

## Claims

1. A method of manufacturing an exterior member bonding type fingerprint recognition home key, comprising:
(a) preparing an injection molded product having a shape of a home key and provided with a fingerprint recognition sensor;
(b) applying a bonding material or an adhesive to an upper side of a film of the fingerprint recognition sensor; and
(c) bonding an external member to the upper side of the film of the fingerprint recognition sensor to which the bonding material or the adhesive is applied.

2. The method according to claim 1, wherein the applying a bonding material or an adhesive comprises applying the bonding material or the adhesive to the upper side of a film of the fingerprint recognition sensor, or attaching a double-sided tape to the upper side of a film of the fingerprint recognition sensor.

3. The method according to claim 1, wherein the external member comprises general glass or tempered glass.

4. The method according to claim 1, wherein the external member comprises general glass or tempered glass having a thickness of 40 µm to 100 µm.

5. The method according to claim 1, wherein the external member comprises sapphire glass.

6. The method according to claim 1, wherein the external member comprises sapphire glass having a thickness of 70 µm to 140 µm.

7. The method according to claim 1, wherein the external member comprises a plastic film or an injection molded thin film.

8. The method according to claim 1, wherein the external member comprises a plastic film or an injection molded thin film having a thickness of 30 µm to 130 µm.

9. The method according to claim 1, wherein the bonding an external member to the upper side of the film of the fingerprint recognition sensor comprises: (c-1) preparing the external member; and (c-2) color printing on a rear of the external member after deposition before bonding the external member to the upper side of the film of the fingerprint recognition sensor.

10. The method according to claim 9, wherein the upper side of the prepared external member has at least one shape selected from among a first shape that is generally flat, a second shape that protrudes upwardly, and a third shape that is recessed downwards.

11. The method according to claim 9, wherein the color printing is performed at least once.

12. The method according to claim 9, wherein the color printing is performed at least once, and the deposition and color print layer has a thickness of 2 µm to 30 µm.
